(19)

**Europäisches Patentamt**
**European Patent Office**
**Office européen des brevets**

(11)  **EP 2 816 803 A1**

(12) **EUROPEAN PATENT APPLICATION**

(43) Date of publication:
24.12.2014  Bulletin 2014/52

(51) Int Cl.:
*H04N 13/02* (2006.01)   *H04N 13/00* (2006.01)

(21) Application number: **13290147.1**

(22) Date of filing: **21.06.2013**

<table>
<tr><td>

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Thomson Licensing**
**92130 Issy-les-Moulineaux (FR)**

</td><td>

(72) Inventor: **Winter, Marco**
**30659 Hannover (DE)**

(74) Representative: **Kurth, Dieter**
**Deutsche Thomson OHG**
**European Patent Operations**
**Karl-Wiechert-Allee 74**
**30625 Hannover (DE)**

</td></tr>
</table>

(54) **Method and processor-controlled machine for color calibration of images of a multi-view or stereoscopic image**

(57)   A processor-controlled machine computes a color calibration or performs an evaluation of the color of images of multi-view or stereoscopic images. A fictive transformation matrix is used for substituting variables of a first set of polynomials calculated from a 3D color histogram describing the 3D color histogram distribution of the pixels in a 3D color space of a reference image of the multi-view or stereoscopic image. A second set of polynomials is set equal to a number of histogram elements of the image at least to be calibrated for providing a transformation matrix for color calibration and also applicable for evaluating the quality of the color of images of multi-view or stereoscopic images.

Fig. 2

**Description**

FIELD OF THE INVENTION

The present invention relates to a method and a processor-controlled machine for color calibration of images of a multi-view or stereoscopic image. Multi-view, stereoscopic or so-called 3D images are composed from at least two images which in general have slight color differences due to the fact that e.g. the means for generating said images have different properties. Therefore, an efficient method and processor-controlled machine for color calibration of the images is recommended. The present invention is furthermore related to an evaluation of the quality of a multi-view or stereoscopic image with regard to the consistency of colors of the at least two images of a multi-view or a stereoscopic image.

BACKGROUND OF THE INVENTION

Single-camera color calibration methods using automatic gain and white balance algorithms are well known. However, these methods produce varying results depending on what portion of a scene each camera views. Even identical cameras, which have the same optical properties and are working under the same lighting conditions, may not match in their color responses. Images of the same object acquired under these variations show color dissimilarities. Therefore, an inter-camera color calibration method already has been recommended that uses a model function to determine how the color histograms of images taken at each camera are correlated. The calibration setup computes pairwise inter-camera model functions that transfer the color histogram response of one camera to the other. Videos of the same scene or objects are recorded for each camera into corresponding databases. Three one dimensional color histograms are computed for each image pair. That means that a red, a green and a blue color histogram are computed for RGB color channels, and correlation matrices are computed by using histograms of each image pair. An aggregated correlation matrix C is calculated by averaging the individual matrices and then, a minimum cost path that connects two ends of the correlation matrix is obtained by dynamic programming. This path represents a mapping from one histogram to another and the shape of the path indicates the amount of warping between the histograms. However, the known histogram based solutions have the problem that the color components are considered separately, i.e. independent from each other. This leads to undesired distortions if the color space of two or more pixel clouds in the color space have one or two similar components, as strong color space shifts, which are partly rather typically for the histogram approach, lead often to visible artifacts.

SUMMARY OF THE INVENTION

A problem to be solved by the invention is to provide a method which enhances the well-known one-component histogram approach to a comprehensive 3D color space considering the 3D color space at once to reduce visible artifacts, i.e. especially to avoid that different 3D color space pixel clouds are treated commonly even if only one color component is similar, to reduce undesired color space shifts.
This problem is solved by a method and a processor-controlled machine disclosed in the independent claims. Advantageous embodiments of the invention are disclosed in respective dependent claims.
In accordance with an aspect of the invention, instead of using histograms for each color component as e.g. the well-known RGB colors, a sharing of pixels in the color space is taken into account. RGB is initialism for red-green-blue, the so-called base or primary colors and 3D is used as an abbreviation for three dimensional, which means having or seeming to have depth or thickness or three directions as RGB in a 3D color space.
It has been found that undesired distortions occur with regard to the color of multi-view or stereoscopic images if two or more pixel clouds in the color space have one or two similar components. A color space pixel cloud means a cloud of pixel having the same or nearly the same color composed of very similar or identical color components as it is e.g. well known from a uniform background color used in television or cinema productions to replace the background color by a different scene. A so-called 3D Keying describes matting processes based on the image representation in a three dimensional space like RGB or HLS. Originally, a matte was a strip of monochrome film that was overlaid with the color film strip so that only parts of the movie were visible. In computer graphics, a matte is a one-channel image used to define the transparent regions of the foreground and background elements of a composite. That means that an image can be represented by a 3D color space by plotting each image pixel as a point into the RGB color space. The image background is e.g. represented as a blue compact pixel cloud, whereas the foreground object shows a larger pixel area ranging over several colors and brightness levels.
Undesired color and shape distortions occur if pixel clouds are similar with regard to one base color axis, however, are different with regard to another base color axis. It happens in such a case, where color components are considered separately, that a similarity of color space pixel clouds is assumed although they are in reality different. That means that by applying the well-known one-component histogram approach, two in reality different color space pixel clouds are shifted in the same one dimensional direction, which causes distortions and further artifacts.

It is an aspect of the present invention to calibrate the color of two images of a multi-view or stereoscopic image by providing a transfer function for transferring the color of one image of a multi-view or stereoscopic image into the color of a second image of the multi-view or stereoscopic image. It is a further aspect of the present invention to provide a transfer function for transferring the color of two images of a multi-view or stereoscopic image in a 3D color space to a value and location in said 3D color space which fits and is coincident for both images of the multi-view or stereoscopic image and it is a third aspect of the present invention to evaluate the color quality of multi-view or stereoscopic and 3D images, respectively. Finally it is an aspect of the invention to perform said calibration and evaluation with low expenditure.

Therefore it is recommended to generate a fictive transformation matrix to be inserted into a first set of polynomials calculated from a 3D color histogram of one of the two images of a multi-view or stereoscopic image for providing a second set of polynomials, wherein each polynomial of the second set of polynomials is set equal to the number of histogram elements of the other image of the two images of the multi-view or stereoscopic image for providing a RGB transformation matrix for color calibration and also applicable for evaluating the color quality of multi-view or stereoscopic and 3D images, respectively. The fictive transformation matrix is described by three polynomials:

$$x' = \sum_{p=0}^{N_x} b_{xqrs} x^q y^r z^s \quad ,$$

$$y' = \sum_{p=0}^{N_y} b_{yqrs} x^q y^r z^s \quad ,$$

$$z' = \sum_{p=0}^{N_z} b_{zqrs} x^q y^r z^s$$

for all $p = q + r + s$ and $q,r,s \in N_0$.

These three polynomials of the fictive matrix are inserted into a 3D polynomial describing the histogram distribution of colors in a 3D color space of an image as $c = a_{000} + a_{100}x + a_{010}y + a_{001}z + a_{200}x^2 + a_{020}y^2 + a_{002}z^2 + a_{110}xy + a_{101}xz + a_{011}yz + a_{300}x^3 + ....$ This 3D color space polynomial will be calculated by the first calculator from the 3D color histogram describing the 3D color histogram distribution of the pixels in the 3D color space of a reference image of the multi-view or stereoscopic image.

The recommended method is performed in a processor-controlled machine to compute a color calibration of color values representing original color values of original image locations in an image region of a color image of multi-view or stereoscopic images and the images can be captured by a multi-view or stereoscopic camera or two cameras. The machine includes a memory for storing data and the data including image definition data defining an image and instruction data. The machine includes furthermore a processor including calculator connected for accessing the image definition data and for accessing the instruction data stored in the memory for operating the machine. The method comprises obtaining a plurality of image region data items indicating image definition data defining an input color image region. Each image region data item indicates coordinate values of a respective original image location in the input color image region and an original color value of the respective original image location. The image data of two of the images of a multi-view or stereoscopic image being stored in a memory for computing 3D color histogram data of said images and for applying at least to one of the images a color transformation. According to an embodiment of the invention, the transformation can be performed by transforming the color of one image into the other image of the two images of a multi-view or stereoscopic image, however, it is also possible to transform the color of both images into images having common color values in a 3D color space between the colors of the first and the second image of the two pictures in a 3D color space.

The transformation of the color of at least one of the images is performed in a processor-controlled machine by using an RGB transformation matrix computed from 3D color space histograms of two images of a multi-view or stereoscopic image. A 3D color space histogram of an image is provided by the color distribution of the image in a 3D color space. That means that the 3D color space, which is preferred an RGB color space, is partitioned in cubes of a predetermined size and the number of pixel in each of the cubes indicates the color distribution of the image in the 3D and RGB color space, respectively. That means that counting how often a pixel of a specific color belonging to a cube in the RGB color space occurs provides a 3D color space histogram of the image.

According to the invention it is recommended to generate a 3D polynomial describing the 3D color space histogram of one of two images of a multi-view or stereoscopic image, to replace pixel coordinates of the 3D polynomial by a corresponding polynomial of the fictive matrix, and to set the result of the replacement equal to histogram elements of the other one of the two images of a multi-view or stereoscopic image for providing a 3D transformation matrix applicable for a transformation of the color of one image into the color of the other image, a transformation of the color of both images to a color in the same color cloud and also applicable to determine the quality of two images of a multi-view or stereoscopic image. The replacement of pixel coordinates of the 3D polynomial by a corresponding polynomial of the fictive matrix is based on the fact that two images of a multi-view or stereoscopic image are in general rather similar.

That means that each component as e.g, the R, the G, and the B component is replaced by a further polynomial as e.g. $a+bR+cG+dB+eR^2+fG^2+gB^2+hRG+iRB+jGB...$, wherein R, G and B are variable coordinates in a RGB color space and a, b, c, d, e ... are constants representing the number of the occurrence of a color in a cube of the 3D color space. The polynomial represents the number of pixels in color space segments into which the entire 3D color space histogram has been divided. According to a preferred embodiment, color space segments are advantageously 3D rectangles of equal size like cubes. The length of the polynomial for describing the color distribution of pixels of an image in a 3D color space is determined by the color depth of the image, the resolution of the image and the number of pixels respectively, the desired precision and expected color differences. After multiplying out the resulting constants of the polynomial for each term, these constants are set equal to the corresponding constants of the other one of the images resulting in a non-linear equation system which is solved to obtain a transformation polynomial for each color component to shift and distort each color space pixel to match the color space pixel cloud of the reference image. The reference image is in this case the other image with which the first image shall be calibrated as e.g. a right and a left image of a multi-view or stereoscopic image. Therefore, the recommended method for color calibration of images of a multi-view or stereoscopic images comprises the steps of calculating a 3D polynomial for at least a part of each image of said multi-view or stereoscopic images to describe the 3D color histogram distribution of the pixels in a 3D color space, dividing the 3D histogram into 3D color segments of e.g. equal size, counting the pixels covered by each cube to generate a 3D polynomial describing the number of counted pixel in each cube and transforming the 3D polynomial of histogram distribution of said at least part of one image to the 3D polynomial of histogram distribution of the at least part of the other image by a polynomial having constants set equal to corresponding constants of the reference image to obtain a transformation polynomial for each color component to shift and distort each color space pixel to match the color space pixel cloud of the reference image.

Color space coordinates in the cube for counting the numbers of pixels covered by a cube are advantageously related to the center of the cube or to the gravity center of pixels located in the cube.

The invention is e.g. applicable to adapt images or at least fragments of an image provided by a right and a left camera having slightly different properties e.g. due to separate lenses, sensors slightly deviating from each other or slightly differences in the arrangement. That means that colour defects caused by different color properties of two cameras providing images for multi-view or stereoscopic images will be corrected. Such a correction is e.g. also advantageous for 3D-subtitling as it allows more precise calculating depth information from the pictures.

Another aspect of the invention is related to evaluating the quality of the color of 3D and multi-view images. The quality of the images becomes measureable by comparing two or more images with the reference image wherein higher constants of the resulting polynomial indicate a stronger difference between the images.

Although only one polynomial of a reference image is used, wherein color coordinates are replaced by the polynomials of the fictive matrix, a transformation matrix can be computed which is applicable for color calibration of two images of a multi-view or stereoscopic image in such a way that the color of one image can be transformed into a color of the other image, the color of both images can be transformed to a color between the colors of both images and which is also applicable to determine the quality of multi-view or stereoscopic images.

In a first glance, it seems to be rather complex, however, surprisingly it has been found that the calculation requires mainly summations which are simple to manage by a machine or processor and the number of components to be handled decreases significantly as it is the nature of stereoscopic and multi-view images that the images on which they are based are in general not significantly different. That means that an efficient method and processor-controlled machine is provided to compute a color calibration and an evaluation of the color quality of multi-view or stereoscopic images.

The proposed method enhances the well-known one-component histogram approach to a comprehensive 3D color space approach and avoids with low expenditure visible artifacts in multi-view or stereoscopic images.

Advantageous embodiments and details of the invention are disclosed in the claims and the following detailed description accompanied by figures.

BRIEF DESCRIPTION OF THE DRAWINGS

The invention will now be described with reference to the accompanying drawings, in which:

Fig.1    is a schematic diagram illustrating cubes arranged in a 3D color space and color space clouds to be shifted to calibrate the color of multi-view or stereoscopic images,

Fig.2    is a schematic illustrating steps of the method and a processor-controlled machine for a color calibration to one of the images of a multi-view or stereoscopic image,

Fig.3    is a schematic diagram illustrating color space clouds having a similar color-component,

Fig.4    is a schematic illustrating steps of the method and a processor-controlled machine for color calibration of both images of a multi-view or stereoscopic image,

Fig.5    is a schematic illustrating steps of the method and a processor-controlled machine for color calibration of both images of a multi-view or stereoscopic image with modified transfer functions,

Fig.6    is a schematic illustrating a color calibration of both images of a multi-view or stereoscopic image to a color between the images,

Fig.7    is a schematic illustrating the result of a color calibration according to Fig. 6,

Fig.8    is a schematic illustrating a color calibration of one image into the color of the other image of two images of a multi-view or stereoscopic image and

Fig.9    is a schematic illustrating the result of a color calibration according to Fig. 8.

## DETAILED DESCRIPTION

Like numerals and characters designate like elements throughout the figures of the drawings.

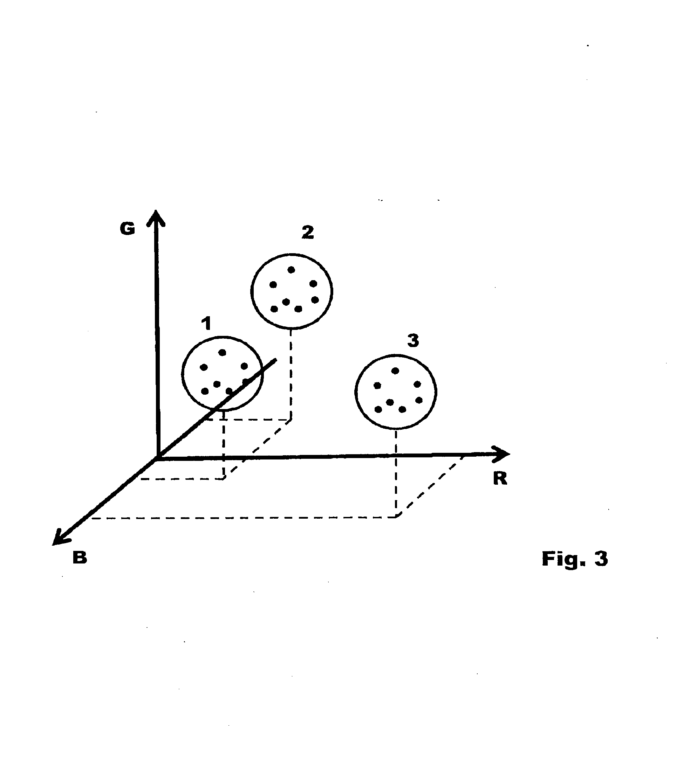

Exemplary embodiments of the invention are described with reference to the accompanying drawings, which show in figure 3 a schematic diagram illustrating three color space clouds 1, 2 and 3, wherein color space clouds 1 and 2 have a similar red color-component R. That means that by applying one-component histogram approach for color correction as e.g. for the red component R, both color space clouds 1 and 2 will be treated in the same manner as they have the same red component R value although they are e.g. different with regard to the blue component B.

It has been postulated that humans can differentiate between millions of gradations in color and color space conversations lead to a shift of the location of the white point in the color space. That means that already small changes in color will be recognized.

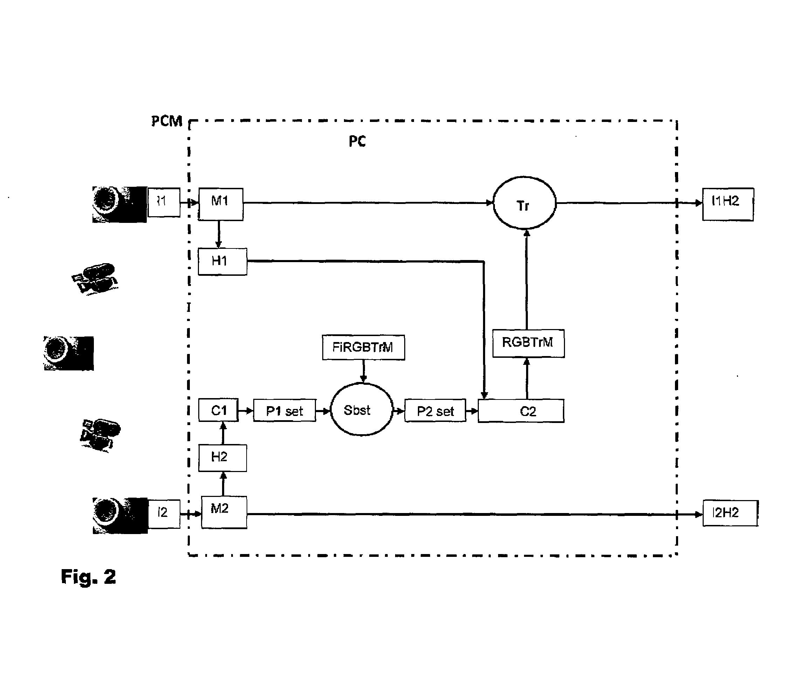

Two cameras used to record a multi-view or stereoscopic image vary not only with regard to geometry and sensitivity; they have also differences with regard to the collected color, so that both images have an aberration in color. As each camera has its own sensor and a different optical pass, it is not relevant whether or not said cameras are arranged in a separate or a common housing. That means that at least two separate pictures or images will be recorded even from an object being uniform in its color. Consequently, two images of a multi-view or stereoscopic image different in color or having a color fog will be reproduced. This is annoying and may cause headache if the right and left eye receive images different in color in a 3D cinema. Furthermore, a calculation of depth information from such pictures is negatively affected. Therefore it is an aspect of the present invention to adapt or calibrate images 11 and 12 of multi-view or stereoscopic images generated with more than one capturing system concerning differences in the reproduced color. The method for color calibration of the images 11, 12 of a multi-view or stereoscopic image is performed in a processor-controlled machine PCM illustrated for different embodiments in Fig. 2, Fig. 4 and Fig. 5. As shown in those pictures, e.g. a lens is captured by two cameras, each illustrated by a symbol of a camera, so that a first image I1 and a second image I2 are provided as images I1, I2 of a multi-view or stereoscopic image. The images 11, I2 have e.g. several colors, not visible in black-white pictures. The colors being slightly different reproduced, e.g. due to different properties of the cameras, so that it is an aspect of the invention to calibrate the colors of the images I1 and I2 or at least one image I1 to the other one - image I2 - or to determine the quality of the color of the images I1 and I2 being images of a multi-view or stereoscopic image.

Therefore, color values representing original color values of original image locations in an image region of color images I1 I2 of multi-view or stereoscopic images are captured by more than one capturing system and stored in a memory M1, M2 of a processor-controlled machine PCM. The processor-controlled machine PCM comprises a memory M1, M2 for storing data including image definition data defining an image and instruction data. A processor PC is included in the processor-controlled machine PCM for accessing the image definition data, and for accessing the instruction data stored in a memory for operating the machine. The memory for operating the machine may be realized as part in memories M1, M2, in a central memory including memories M1, M2 or in a separate memory. As e.g. illustrated in Fig.2, a plurality of image region data items indicating image definition data defining an input color image region is obtained by each camera capturing system as at least a part of a first image 1 and a second image I2 as e.g. an image from the right side of the object - a right image - and an image from the left side of the object - a left image -. Each image region data item indicates coordinate values of a respective original image location in the input color image region and an original color value of the respective original image location.

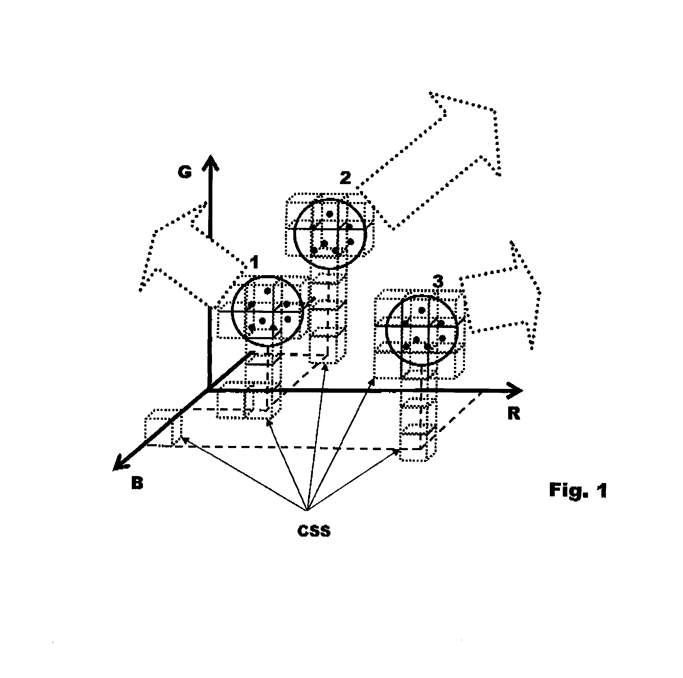

As illustrated in Fig.1, according to the invention for color calibration of images I1, I2 of a multi-view or stereoscopic image capturing system, a RGB color space is divided into color space segments CSS. According to an embodiment of the invention illustrated in Fig.1, those color space segments CSS are cubes of predetermined size. Color space segments CSS are used for partitioning the RGB color space to provide data about the color distribution of an image in a RGB color space. It is possible to use color space segments CSS of equal or different size and shape for portioning a 3D color space or to select only specific color space segments CSS if the extension of colors in the 3D color space is known. A 3D color space histogram of the image is provided by counting the pixels in color space segment CSS of the RGB color space. That means that for describing the 3D histogram distribution of pixels in the color space, the color space is divided into 3D segments as e.g. cubes of equal size, as it is illustrated in Fig. 1. As shown in Fig. 2, a histogram H1, H2 is computed for at least a part of each image I1, I2 of the multi-view or stereoscopic image to describe the 3D histogram distribution of pixels in the RGB color space which e.g. has been divided into cubes of equal size. A 3D polynomial as a first set of polynomial P1 set for describing the histogram distribution can be expressed by a formula like the following equation

$$(1) \quad c = a_{000} + a_{100}x + a_{010}y + a_{001}z + a_{200}x^2 + a_{020}y^2 + a_{002}z^2 + a_{110}xy + a_{101}xz + a_{011}yz + a_{300}x^3 + \ldots$$

wherein c is the count result of pixels covered by cubes, x, y, z are the coordinates to address a cube, $a_{ijk}$ is a constant factor for each polynomial term and $x^i y^j z^k$ are variable. Therefore, the polynomial can be expressed as equation

$$(2) \quad c = \sum_{m=0}^{N} a_{ijk} x^i y^j z^k \qquad \text{for all } m = i + j + k \text{ and } i, j, k \in \mathbb{N}_0$$

Wherein $\in \mathbb{N}_o$ means that indexes i, j and k are natural numbers as 0, 1, 2, 3 ....

A specific count value c is available for each cube as mentioned above. That means that a linear regression may be applied to calculate factor elements $a_{ijk}$. A linear regression is applicable as long as the image has more cubes than $a_{ijk}$ elements. In the following, the number of $a_{ijk}$ elements is called Na and is only dependent on the length of the polynomial. This is shown in the following equation

$$(3) \quad N_a \geq \sum_{i=0}^{N} \frac{(i+1)(i+2)}{2} = \sum_{i=0}^{N} \frac{i^2 + 3i + 2}{2} = \frac{3N^2 + 7N + 4}{4} + \frac{1}{2}\sum_{i=1}^{N} i^2 \quad \text{with } N, N_a \in \mathbb{N}_1$$

That means that a 24bit color resolution as e.g. RGB and cubes of 8x8x8 leads to a number of elements $N_a$ = 256x256x256 / (8x8x8) = 32768 elements.

Consequently, N may be up to about 255.5. This leads to an N of 0..255 for equation (2) or an equation (2) with N of 256 without some terms for m=256.

The center of the cubes can be used for the x, y, z coordinates. Alternatively the gravity center of all pixels located in the cube could be used. However, even other derived centers could be used. The x, y, z coordinates have to be carefully interpreted because they are coordinates in the 3D color space and not in the image space.

In case of an RGB image, the coordinates are in general the so-called R, G, B basic colors.

The linear regression can be applied to both of a stereo pair of images so that two equations of equation (2) could be provided.

It is an aspect of the invention to transform the formula for one image to the formula for the other image. That means that the 3D polynomial of histogram distribution of said at least part of one image has to be transformed into the 3D polynomial of histogram distribution of the at least part of the other image.

In the case of stereoscopic images I1 I2, the images are in general rather similar. Then the transformation may be done by replacing each x, y, and z by an appropriate polynomial as described by following equations (5x), (5y), and (5z).

$$(5x) \quad x' = \sum_{p=0}^{N_x} b_{xqrs} x^q y^r z^s ,$$

$$(5y) \quad y' = \sum_{p=0}^{N_y} b_{yqrs} x^q y^r z^s ,$$

$$(5z) \quad z' = \sum_{p=0}^{N_z} b_{zqrs} x^q y^r z^s$$

for all $p=q+r+s$ and $q,r,s \in \mathbf{N_0}$

Inserting equation (5) into equation (2) leads to an equation (6).

$$c = \sum_{m=0}^{N} a_{ijk} \left( \sum_{p=0}^{N_x} b_{xqrs} x^q y^r z^s \right)^i \left( \sum_{p=0}^{N_y} b_{yqrs} x^q y^r z^s \right)^j \left( \sum_{p=0}^{N_z} b_{zqrs} x^q y^r z^s \right)^k$$

In such a way, a polynomial having constants set equal to corresponding constants of the reference image is generated to obtain a transformation polynomial for each color component.

Multiplying out equation (6) and a re-ordering to a polynomial leads to comparable component values as shown by following equations (7a), (7b) and (7c), wherein as an example components $a'_{ijk}$ of the target image are arranged on the left side and components $a_{ijk}$ of the non-calibrated image, are arranged on the right side.

$$(7a) \quad a'_{000} = a'_{m=0} = a_{000} + \sum_{m=0}^{N} a_{ijk} b^i_{x000} b^j_{y000} b^k_{z000}$$

(7b)

$$a'_{m=1} = \sum_{jk=0}^{N} a_{1jk} b_{xm} b^j_{y000} b^k_{z000} + \sum_{ik=0}^{N} a_{i1k} b^i_{x000} b_{ym} b^k_{z000} + \sum_{ij=0}^{N} a_{ij1} b^i_{x000} b^j_{y000} b_{zm}$$

(7c)

$$a'_m = \sum_{j,k=0}^{N} a_{2jk} b_{xm_1} b_{y000}^{j} b_{z000}^{k} + \sum_{i,k=0}^{N} a_{i2k} b_{x000}^{i} b_{ym_1} b_{z000}^{k} + \sum_{i,j=0}^{N} a_{ij2} b_{x000}^{i} b_{y000}^{j} b_{zm_1} +$$

$$\sum_{j,k=0}^{N} a_{1jk} b_{xm} b_{y000}^{j} b_{z000}^{k} + \sum_{i,k=0}^{N} a_{i1k} b_{x000}^{i} b_{ym} b_{z000}^{k} + \sum_{i,j=0}^{N} a_{ij1} b_{x000}^{i} b_{y000}^{j} b_{zm} +$$

$$\sum_{k=0}^{N} a_{11k} b_{xm_1} b_{ym_1} b_{z000}^{k} + \sum_{i=0}^{N} a_{i11} b_{x000}^{i} b_{ym_1} b_{zm_1} + \sum_{j=0}^{N} a_{1j1} b_{xm_1} b_{y000}^{j} b_{zm_1}$$

$$\text{with } m = \begin{cases} 200 \text{ and } m_1 = 100 \\ 020 \text{ and } m_1 = 010 \\ 002 \text{ and } m_1 = 001 \end{cases}$$

That means that finally a shifting and distorting of each color space pixel is performed to match the color space pixel cloud of a reference image belonging to said multi-view or stereoscopic images. In other words, the equations are used to transform the color space coordinates as e. g. RGB of the non-calibrated images I1, I2 which is e. g. the right image to the color space close to the target image as e. g. the left image. That means that equations (5x), (5y), (5z) are used to transform each pixel's color value as e. g. 24bit RGB wherein each color component is a dimension in the equations (5x), (5y), (5z) e.g. x = Red 8bit, y = Green 8bit, z = Blue 8bit.

The formulas look rather complex. However, summations are simple to manage by a processor. For the purpose of color calibration, Nx, Ny, and Nz are rather low, e. g. 2 or 3. This reduces especially the number of components $a'_m$.

For example, if Nx = Ny = Nz = 3, then there are 12 unsolved variables. So, only 12 components aijk are necessary to get a result for the equations (5x), (5y), and (5z). Of course, components with lower indices m=i+j+k should be preferred. Due to the nature of stereoscopic pictures, the components are usually not that different. So, the components will typically decrease significantly by increasing m=i+j+k.

The result is a function set of non-linear equations. This may be solved by appropriate methods like Newton's method for non-linear equations or even better by the Levenberg-Marquardt-algorithm. With solving the equation system we get the equations (5x), (5y), and (5z).

These equations are then used to transform the color space coordinates, e. g. RGB, of the non-calibrated image, e. g. the right image, to the color space close to the target image, e. g. the left image. I.e. the equations (5x), (5y), (5z) are used to transform each pixel's color value as e.g. 24bit RGB wherein each color component is a dimension in the equations (5x), (5y), (5z) e.g. x=Red 8bit, y=Green 8bit, z=Blue 8bit.

It is a further aspect of the present invention to use the result of the calculation as a base for a quality measurement, i.e. to compare two or more images with a reference. Higher constants of the resulting polynomials are than an indication for a stronger difference between two images.

Fig. 1 illustrates by arrows of different length and direction the value and direction for which the color of an image shall be shifted to adapt and being calibrated with the color of a second image. Said images are multi-view or stereoscopic images for which the 3D histogram distribution of pixels in a RGB color space is calculated by partitioning the RGB color space into color space segments being e.g. cubes in the embodiment illustrated in Fig. 1.

Fig. 1 illustrates the 3D histogram distribution of pixels in the RGB color space for one image. That means that the 3D histogram distribution H1, H2 of pixels in the RGB color space is calculated for each of the images I1, I2 and a 3D polynomial describing the number of counts in each color space segment is derived by counting the pixels covered by each color space segment. Finally, a transformation polynomial as a RGB transformation matrix RGBTrM is calculated by comparing the counting results of the pixels covered by corresponding color space segments of the other one of the two images I1, I2 in the RGB color space. As shown in Fig. 2, a transformation Tr is used for shifting and distorting each color space pixel of a first image I1 to match the color space pixel of the other image I2. That means, as illustrated in Fig. 2, that a RGB transformation matrix RGBTrM is applied to the first image I1 to transform the color of the first image I1 into the color of the second image I2 resulting in a modified first image I1H2 having a color being calibrated to the color of the second image I2. That means that both images I1, I2 have the same or nearly the same distribution of pixel in the 3D color space dependent on the strength of calibration determined by the length of the used polynomials.

Furthermore, values of the constants in the RGB transformation matrix RGBTrM indicate color dissimilarities between I1, I2 images, so that the recommended method is also applicable to determine the color quality of multi-view or stereoscopic images.

Fig. 2 illustrates an embodiment of the method for operating the processor-controlled machine PCM and the structure of the processor-controlled machine PCM to perform color calibration or to evaluate the color quality of of multi-view or stereoscopic images.

According to a first exemplary embodiment of the present invention, illustrated in Fig. 2, the processor-controlled machine PCM is integrated in and part of a multi-view and stereoscopic camera system respectively, which includes at least a system providing a first image I1 and a second image I2 as e.g. the right image and the left image of an object. However, the processor-controlled machine PCM also can be used as a machine for a postproduction of multi-view or stereoscopic images supplied by the first image I1 and the second image I2. The object may be any kind of object and has to be understood in the broadest meaning including everything as e.g. also human as well as flora and fauna. According to a third exemplary embodiment of the present invention, the processor-controlled machine PCM is a machine for evaluating the quality of multi-view or stereoscopic images, wherein constants of the RGB transformation matrix RGBTrM generated from the two images I1, I2 indicate the quality of the multi-view or stereoscopic image.

The processor-controlled machine PCM, illustrated in Fig. 2, Fig. 4 and Fig. 5, comprises memory M1, M2 for storing data, the data including image definition data defining an image and instruction data and a processor PC connected for accessing the image definition data, and for accessing the instruction data stored in a memory for operating the processor-controlled machine PCM. The processor PC of the processor-controlled machine PCM is illustrated by processor means for several tasks as e.g. for computing 3D color histograms H1, H2 of pixels of the images I1, I1. A fist calculator C1 is provided for generating a first set of polynomial P1 set describing the number of counts c in each color space segment. According to the exemplary embodiment illustrated in Fig. 2, Fig.4 and Fig.5, the second image I2 shall be the reference image for which the second 3D color histogram H2 has been generated which is applied to the fist calculator C1. The first set of polynomial P1 set is applied to a substituter Sbst for replacing variables of the first set of polynomial P1 set by values of a fictive transformation matrix FiRGBTrM for generating a second set of polynomial P2 set applied to a second calculator C2 for calculating with values of the first 3D color histogram H1 a RGB transformation matrix RGBTrM applied to the first image I1 for a transformation Tr of the color of the first image I1 in the RGB color space into a modified first image I1H2 having a color distribution in the RGB color space coincident or very similar to the color distribution in the RGB color space of the second image I2 and the reference image respectively.

A linear regression for each RGB polynomial is performed in calculators C1, C2 for generating the RGB transformation matrix RGBTrM used for a transformation Tr of the color of the first image I1 into the color of the second image I2 or applicable for determining the quality of the images I1, I2 of a multi-view or stereoscopic image by evaluating the constants of the RGB transformation matrix RGBTrM.

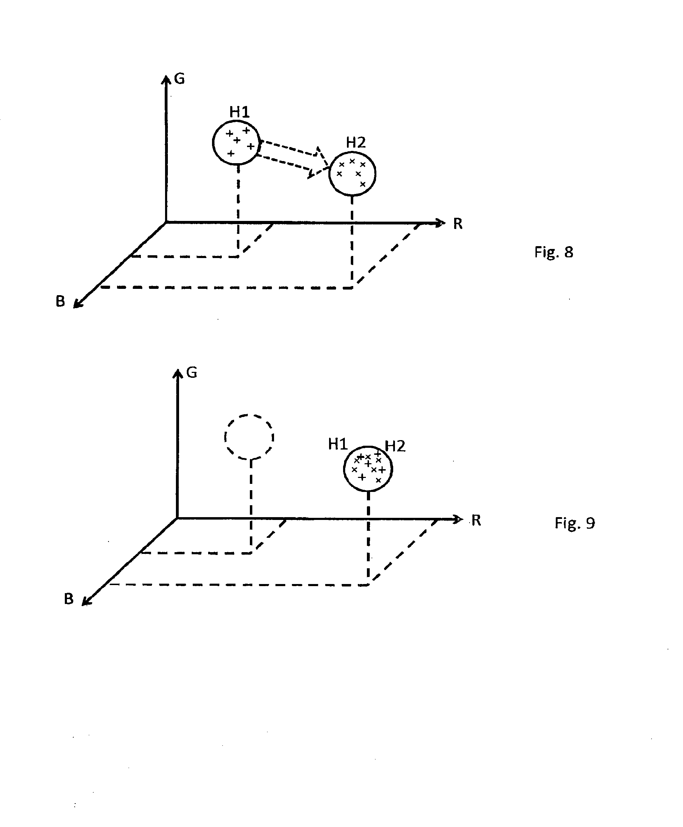

A color transformation and a color calibration of a first image I1 into the color of the second image I2 being the reference image is illustrated in Fig. 8 and Fig. 9.

Fig. 8 illustrates a color distribution of a first image I1 as a first color histogram H1 of the first image I1 in a RGB color space which is different to a color distribution of a second image I2 as a second color histogram H2 of the second image I2 in the RGB color space as it is applied to the processor-controlled machine PCM. Fig. 8 illustrates furthermore that the color distribution of the first image I1 with the first color histogram H1 shall be transformed into the color distribution of the second image I2 with the second color histogram H2. The transformation according to this embodiment results in a common color histogram H1, H2 which is valid for both, the first image I1 and the second image I2.

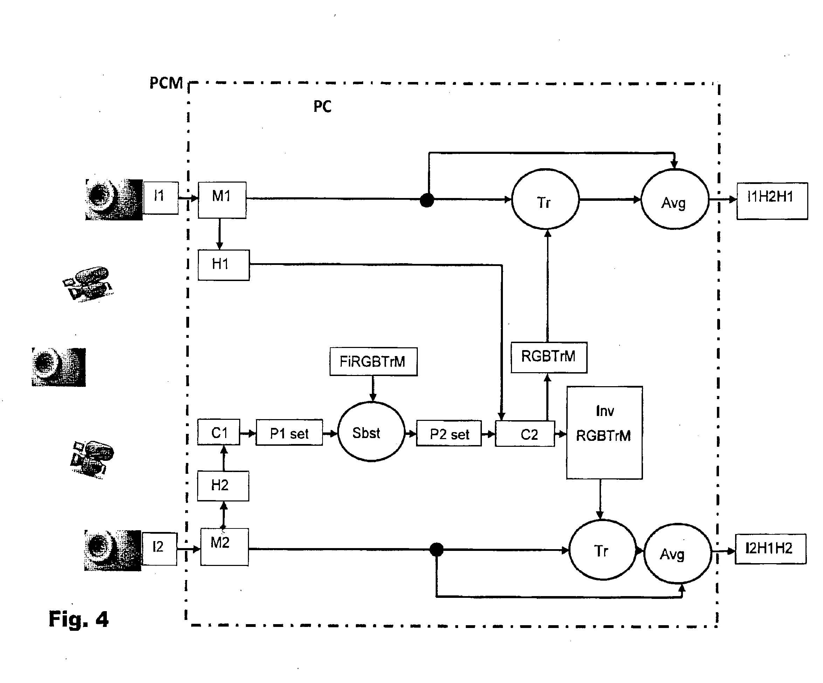

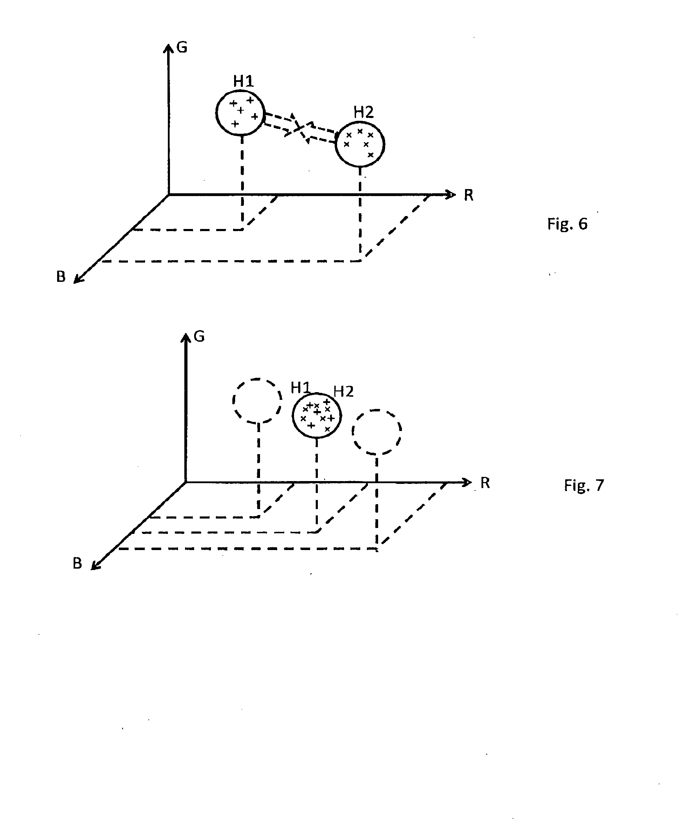

However, the present invention is not limited to the embodiment as illustrated in Fig. 2. Fig. 4 illustrates an embodiment wherein the efficient method and arrangement according to the present invention is used for color transformation Tr of the color of both images I1, I2 to a color in the RGB color space also valid for both images I1, I2, however, between the color of both of the images as shown in Fig. 6 and Fig. 7. That means that, as shown in Fig. 6, the color distribution in the RGB color space of both images I1, I2 is shifted in the RGB color space to a location between both images I1, I2 as it is illustrated by arrows in Fig. 6. Fig. 7 illustrates the result in that both images I1 I2 have the same or nearly the same color histogram H1, H2 occurring between the first color histogram H1 and the second color histogram H2. An embodiment of a processor-controlled machine PCM for performing such color transformation is illustrated in Fig. 4. The processor-controlled machine PCM includes the means already disclosed with regard to the embodiment illustrated in Fig. 2 and comprises furthermore an inverter providing an inverted RGB transformation matrix InvRGBTrM applied to a second transformer Tr and two calculating machines Avg each connected to an output of a transformer Tr for providing color calibrated images I1H2H1 and I2H1H2. A further input of each calculating machine Avg is supplied by data of the original image as the first image I1 and the second image I2 respectively.

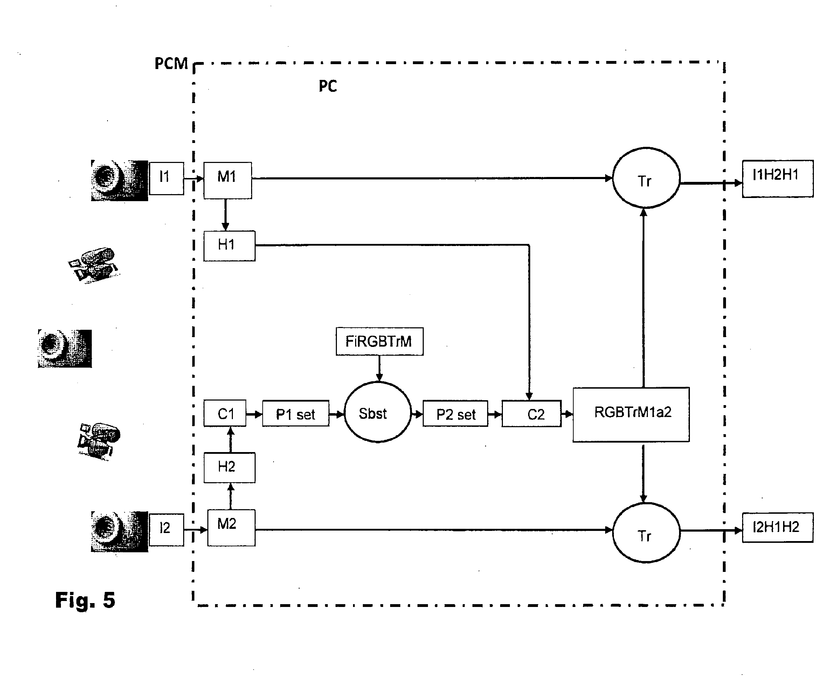

A further embodiment of the invention is illustrated in Fig. 5, wherein in difference to the embodiment illustrated in Fig. 2, a modified RGB transformation matrix RGBTrM1a2 is computed for a color calibration into a color between the colors of both images I1, I2 as illustrated in Fig. 6 and Fig. 7. The modified RGB transformation matrix RGBTrM1a2 is a RGB transformation matrix RGBTrM being modified with regard to constants set to half of the original value. The modified RGB transformation matrix RGBTrM1a2 is then applied inverse to the reference image I2 and as original to the other image I1. In such a way, the two calculating machines Avg according to the embodiment illustrated in Fig. 4 are not needed. That means that a processor-controlled machine PCM is realised with low expenditure.

Although the invention has been shown and described with respect to three specific embodiments thereof, it should be understood by those skilled in the art that the foregoing and various other changes, omissions and additions in the form and detail thereof may be made therein without departing from the spirit and scope of the claims.

**Claims**

1. A method for operating a processor-controlled machine (PCM) to compute a color calibration or to perform an evaluation of the color of images (I1, I2) with color values representing original color values of original image locations in an image region of color images of multi-view or stereoscopic images captured by a multi-view or stereoscopic camera or two cameras;
the machine including memory (M1 M2) for storing data, the data including image definition data defining an image and instruction data, and a processor (PC) including calculators (C1, C2) connected for accessing the image definition data, and for accessing the instruction data stored in the memory for operating the machine; **the method comprising:**

   obtaining a plurality of image region data items indicating image definition data defining an input color image region, each image region data item indicating coordinate values of a respective original image location in the input color image region and an original color value of the respective original image location;
   generating with the processor (PC) a fictive transformation matrix (FiRGBTrM) to be inserted into a first set of polynomials (P1 set) describing a histogram distribution of colors in a 3D color space of an image,
   substituting with a substituter (Sbst) variables of the first set of polynomials (P1 set) calculated with a first calculator (C1) from a 3D color histogram (H2) describing the 3D color histogram distribution of the pixels in a 3D color space of a reference image of the multi-view or stereoscopic image for providing a second set of polynomials (P2 set),
   setting each polynomial of the second set of polynomials (P2 set) with a second calculator (C2) equal to a number of histogram elements of the image at least to be calibrated for providing a RGB transformation matrix (RGBTrM) for color calibration and also applicable for evaluating the quality of the color of images (I1, I2) of multi-view or stereoscopic images.

2. The method according to claim 1, wherein said 3D color histogram (H2) is an RGB histogram of the reference image in a RGB color space which is divided into color space segments (CSS) of predetermined size to describe the 3D color histogram distribution of the pixels in the RGB color space.

3. The method according to claim 2, wherein said color space segments (CSS) are cubes of predetermined size used for counting the pixels covered by each color space segment to describe the 3D color histogram distribution of the pixels in the RGB color space.

4. The method according to claim 1, wherein a 3D color histogram (H1) describing the 3D color histogram distribution of the pixels in a 3D color space of the image at least to be calibrated is generated to determine the number of histogram elements of said image for providing a RGB transformation matrix (RGBTrM) for color calibration and also applicable for evaluating the quality of the color of images (I1, I2) of multi-view or stereoscopic images.

5. The method according to claim 1, wherein color space coordinates within said color space segments (CSS) for counting the number of pixels covered by a color space segment (CSS) are related to the center of the color space segment (CSS).

6. The method according to claim 1, wherein color space coordinates within said color space segments (CSS) for counting the number of pixels covered by a color space segment (CSS) are related to the gravity center of pixels located in the color space segment (CSS).

7. The method according to claim 1, wherein the value of the constants of the RGB transformation matrix (RGBTrM) indicates the quality of the color of images (I1, I2) of multi-view or stereoscopic images.

8. The method according to claim 1, wherein the RGB transformation matrix (RGBTrM) is applied to the image at least to be calibrated by a transformer (Tr) for a color transformation of said image into the color distribution of the reference image.

9. The method according to claim 1, wherein the RGB transformation matrix (RGBTrM) is applied to the image at least to be calibrated by a transformer (Tr), an inverted RGB transformation matrix (Inv RGBTrM) is applied by a transformer (Tr) to the reference image and the transformed images and the original image data are applied to a calculating machine (Avg) for providing color calibrated images (I1H2H1) and (I2H1H2) calibrated into a color distribution between said images(I1,I2).

10. The method according to claim 1, wherein a modified RGB transformation matrix (RGBTrM1a2) being a RGB transformation matrix (RGBTrM) modified with regard to constants set to half of the original value is applied by a transformer (Tr) inverse to the reference image and as original to the other image of two images (11,12) of a multi-view or stereoscopic image for providing color calibrated images (I1H2H1) and (I2H1H2) calibrated into a color distribution between said images (I1, I2).

11. A processor-controlled machine (PCM) to compute a color calibration or to perform an evaluation of the color of images (I1, I2) with color values representing original color values of original image locations in an image region of color images of multi-view or stereoscopic images captured by a multi-view or stereoscopic camera or two cameras; the machine including memory (M1 M2) for storing data, the data including image definition data defining an image and instruction data; and a processor (PC) including calculators (C1, C2) connected for accessing the image definition data, and for accessing the instruction data stored in the memory for operating the machine; the processor-controlled machine (PCM) comprises:

a memory (M1 M2) for receiving and storing a plurality of image region data items indicating image definition data defining an input color image region; each image region data item indicating coordinate values of a respective original image location in the input color image region and an original color value of the respective original image location;
a processor (PC) for generating with the processor (PC) a fictive transformation matrix (FiRGBTrM) to be inserted into a first set ,of polynomials (P1 set) describing the histogram distribution of colors in a 3D color space of an image,
a substituter (Sbst) replacing variables of the first set of polynomials (P1 set) calculated with a first calculator (C1) from a 3D color histogram (H2) describing the 3D color histogram distribution of the pixels in a 3D color space of a reference image of the multi-view or stereoscopic image for providing a second set of polynomials (P2 set),
a second calculator (C2) setting each polynomial of the second set of polynomials (P2 set) equal to a number of histogram elements of the image at least to be calibrated for providing a RGB transformation matrix (RGBTrM) for color calibration and also applicable for evaluating the quality of the color of images (I1, I2) of multi-view or stereoscopic images.

12. The processor-controlled machine (PCM) according to claim 11, wherein the processor (PC) comprises:

a memory for providing the fictive transformation matrix (FiRGBTrM), the substituter (Sbst), the first calculator (C1), the second calculator (C2) and a transformer (Tr) for applying a transformation matrix (RGBTrM) to the image at least to be calibrated for color calibration and also applicable for evaluating the quality of the color of images (I1, I2) of multi-view or stereoscopic images.

13. The processor-controlled machine (PCM) according to claim 11, or the method according to claim 1, wherein the fictive transformation matrix is determined by three polynomials

$$x' = \sum_{p=0}^{N_x} b_{xqrs} x^q y^r z^s \quad ,$$

$$y' = \sum_{p=0}^{N_y} b_{yqrs} x^q y^r z^s \quad ,$$

$$z' = \sum_{p=0}^{N_z} b_{zqrs} x^q y^r z^s$$

for all $p=q+r+s$ and $q,r,s \in N_0$

to be inserted into a 3D polynomial describing the histogram distribution of colors in a 3D color space of an image as $c = a_{000} + a_{100}x + a_{010}y + a_{001}z + a_{200}x^2 + a_{020}y^2 + a_{002}z^2 + a_{110}xy + a_{101}xz + a_{011}yz + a_{300}x^3 + $ ....calculated by the first calculator from the 3D color histogram describing the 3D color histogram distribution of the pixels in the 3D color space of a reference image of the multi-view or stereoscopic image.

14. The processor-controlled machine (PCM) according to claim 11, wherein the processor (PC) calculates a 3D color histogram (H1, H2) of two images (I1, I2) of multi-view or stereoscopic images by dividing a 3D color space into color space segments (CSS) of predetermined size for counting the number of pixels of the image in each color space segment (CSS) to describe the 3D color histogram distribution of the pixels in the 3D color space.

15. The processor-controlled machine (PCM) according to claim 11, wherein the processor (PC) calculates a 3D color histogram (H1) describing the 3D color histogram distribution of the pixels in a 3D color space of the image at least to be calibrated to provide the number of histogram elements of said image for providing the RGB transformation matrix (RGBTrM).

16. The processor-controlled machine (PCM) according to claim 11, wherein the processor (PC) outputs the value of the constants of the RGB transformation matrix (RGBTrM) for indicating the quality of the color of images (I1, I2) of multi-view or stereoscopic images.

17. The processor-controlled machine (PCM) according to claim 11, wherein the processor (PC) includes a transformer (Tr) for applying the RGB transformation matrix (RGBTrM) to the image at least to be calibrated and a transformer (Tr) for applying an inverted RGB transformation matrix (Inv RGBTrM) to the reference image and comprises calculating machines (Avg) for providing color calibrated images (I1H2H1) and (I2H1H2) calibrated into a color distribution between said images (I1, I2).

18. The processor-controlled machine (PCM) according to claim 11, wherein the processor (PC) computes a modified RGB transformation matrix (RGBTrM1a2) by setting constants of the RGB transformation matrix (RGBTrM) to half of the original value and applies the inverted modified RGB transformation matrix (RGBTrM1a2) with a transformer (Tr) to the reference image and as original to the other image of two images (I1,I2) of a multi-view or stereoscopic image for providing color calibrated images (I1H2H1) and (I2H1H2) calibrated into a color distribution between said images (I1, I2).

19. The processor-controlled machine (PCM) according to claims 11 to 18, **characterized in that** the processor-controlled machine (PCM) is used in a post-production process for calibrating colors of the images (I1, I2) of a multi-view or stereoscopic image.

**Fig. 1**

Fig. 2

Fig. 3

Fig. 4

Fig. 5

Fig. 6

Fig. 7

Fig. 8

Fig. 9

Europäisches
Patentamt

European
Patent Office

Office européen
des brevets

# EUROPEAN SEARCH REPORT

Application Number

EP 13 29 0147

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | CLYDE MOUFFRANC ET AL: "Colorimetric Correction for Stereoscopic Camera Arrays", 5 November 2012 (2012-11-05), COMPUTER VISION - ACCV 2012 WORKSHOPS, SPRINGER BERLIN HEIDELBERG, BERLIN, HEIDELBERG, PAGE(S) 206 - 217, XP047027037, ISBN: 978-3-642-37409-8 * the whole document * | 1-19 | INV. H04N13/02 H04N13/00 |
| Y | HUANZHANG FU ET AL: "Region Based Visual Object Categorization Using Segment Features and Polynomial Modeling", 4 December 2008 (2008-12-04), STRUCTURAL, SYNTACTIC, AND STATISTICAL PATTERN RECOGNITION, SPRINGER BERLIN HEIDELBERG, BERLIN, HEIDELBERG, PAGE(S) 277 - 286, XP019112448, ISBN: 978-3-540-89688-3 * parts 2.2 and 3.1 * | 1-19 | |
| A | JEFERSON R SILVA ET AL: "Automatic camera control in virtual environments augmented using multiple sparse videos", COMPUTERS AND GRAPHICS, ELSEVIER, GB, vol. 35, no. 2, 22 January 2011 (2011-01-22), pages 412-421, XP028164989, ISSN: 0097-8493, DOI: 10.1016/J.CAG.2011.01.012 [retrieved on 2011-02-09] * part 3.3 * | 1-19 | TECHNICAL FIELDS SEARCHED (IPC) H04N |

The present search report has been drawn up for all claims

| Place of search | Date of completion of the search | Examiner |
|---|---|---|
| Munich | 8 November 2013 | Rolet, Etienne |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)